# EUROPEAN PATENT APPLICATION

(11) **EP 4 560 149 A1**
(43) Date of publication of application: **28.05.2025**
(21) Application number: 24207913.5
(22) Date of filing: 21.10.2024
(51) Int. Cl.: F16B 2/08, F16B 2/12, F16B 5/06

(54) **CLAMPING DEVICE**

(30) Priority: 22.11.2023 US 202318517826
(71) Applicant: Honeywell Safety Products USA, Inc., Charlotte, NC 28202 (US)
(72) Inventor: MACISAK, Jozef, Charlotte, 28202 (US); MACKA, Jiri, Charlotte, 28202 (US); HRUZA, Vaclav, Charlotte, 28202 (US)
(74) Representative: Haseltine Lake Kempner LLP

(57) **Abstract**

A clamping device is disclosed. The clamping device comprises a belt having free ends and braced around a pole. The belt comprises a fastening unit coupled to the free ends of the belt to adjust diameter of the belt around the pole. Further, the clamping device comprises a base plate having at least two slots to receive the belt. Thereafter, the base plate defines contact points with the pole, to provide a uniform distribution of force.

## Description

### FIELD OF THE INVENTION

Example embodiments of the present disclosure relate generally to a clamping device and, more particularly, to a clamping device adapted to be mounted over poles and pipes of varying diameter.

### BACKGROUND

Fastening devices such as clamps are used to hold or secure accessories like a clamping ladder, tightly together over poles, pipes etc. The clamps are primarily, in some examples, used to prevent movement or separation of the accessories from the poles and pipes. Various types of clamps are available for fastening of different types of accessories, according to diameter and length of the poles and pipes etc. However, despite recent modifications in the design, such clamps lack the versatility to hold various diameters of the poles and pipes. For varying diameter and length of the poles and pipes, end users install different sizes and designs of clamps. Additionally, in some examples, these clamps do not provide a versatile design that is capable of equally distributing forces applied by the accessories over the clamps. Such unequal distribution of force subjects the clamps to breaking stress, which can lead to fracture or breaking of the clamps.

However, the applicant has identified many technical challenges and difficulties associated with clamps. Through applied effort, ingenuity, and innovation, the Applicant has solved problems relating to the clamp by developing solutions embodied in the present disclosure, which are described in detail below.

### BRIEF SUMMARY

The following presents a simplified summary in order to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In an example embodiment, a clamping device is provided. The clamping device comprises a belt having free ends. Further, the clamping device comprises a fastening unit coupled to the free ends, to adjust diameter of the belt. Further, the clamping device comprises a base plate having at least two slots to receive the belt. The base plate defines contact points with the pole, to provide a uniform distribution of force.

In some embodiments, each of the free ends of the belt is coupled to at least one shaft having at least one hole to allow the engagement of the fastening unit with the belt. Further, the fastening unit includes at least one bolt and at least one nut for adjusting the diameter of the belt according to diameter of the pole.

In some embodiments, the base plate further comprises at least two peaks and at least one elongated portion. The at least one elongated portion is configured to attach one or more accessories with the clamping device. In some embodiments, the at least two peaks define the contact points of the base plate with the pole to provide the uniform distribution of force.

In some embodiments, the belt and the base plate are made of at least one of steel, aluminum alloys, or iron.

In another example embodiment, a clamping device is provided. The clamping device comprises a belt having free ends. Further, the clamping device comprises a base plate having one or more slots for receiving one or more fasteners. The base plate is coupled to the free ends of the belt using the one or more fasteners, to adjust diameter of the belt. Further, the base plate defines contact points with the pole, to provide a uniform distribution of force.

In some embodiments, each of the free ends of the belt is coupled to at least one shaft having at least one hole to allow the engagement of the one or more fasteners with the belt.

In some embodiments, the base plate further comprises at least two peaks and at least one elongated portion. The at least one elongated portion is configured to attach one or more accessories with the clamping device. The at least two peaks define the contact points of the base plate with the pole to provide the uniform distribution of force.

In another example embodiment, a clamping device is provided. The clamping device comprises a belt having free ends and braced around a pole. The belt having a clamping mechanism at the free ends, to adjust diameter of the belt around the pole. Further, the clamping device comprises a base plate coupled to the belt. The base plate defines contact points with the pole, to provide a uniform distribution of force.

In some embodiments, the clamping mechanism includes at least one bolt and at least one nut for adjusting the diameter of the belt according to diameter of the pole. Further, the clamping mechanism is configured to couple the belt with the base plate via one or more slots fabricated over the base plate.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 is an isometric view of a clamping device, in accordance with an example embodiment of the present disclosure;
FIG. 2 is a top view of the clamping device, in accordance with an example embodiment of the present disclosure;
FIGS. 3A-3B illustrate the clamping device braced around a pole, in accordance with an example embodiment of the present disclosure;
FIGS. 4A-4B illustrate the clamping device coupled to a ladder and braced around the pole, in accordance with another example embodiment of the present disclosure;
FIG. 5 is an isometric view of a clamping device, in accordance with another embodiment of the present disclosure;
FIG. 6 is a top view of the clamping device, in accordance with an example embodiment of the present disclosure; and
FIGS. 7A-7B illustrate the clamping device braced around a pole, in accordance with another example embodiment of the present disclosure.

### DETAILED DESCRIPTION OF THE INVENTION

Some embodiments will now be described more fully hereinafter with reference to the accompanying drawings, in which some, but not all, embodiments are shown. Indeed, various embodiments may be embodied in many different forms and should not be construed as limited to the embodiments set forth herein; rather, these embodiments are provided so that this disclosure will satisfy applicable legal requirements. As discussed herein, the protection devices may be used by humans, but may also be used to raise and lower objects unless otherwise noted.

The components illustrated in the figures represent components that may or may not be present in various embodiments of the invention described herein such that embodiments may include fewer or more components than those shown in the figures while not departing from the scope of the invention. Some components may be omitted from one or more figures or shown in dashed line for visibility of the underlying components.

Various embodiments of the present disclosure include clamping devices. In some embodiments, the present disclosure relates to a clamping device that includes a clamp for installation with one bolt while keeping a correct distribution of force transfer using a belt. Such innovative solution advantageously allows, in some examples, using a single version of a clamp for poles with different diameter and/or other available installation options. The clamp also includes a base plate that is, in some examples, a bended metal sheet providing at least two contact points with a pole for better stability. Additionally or alternatively, different accessories can be welded on the base plate. In some example embodiments, the clamping device may be braced around the pole to provide support for an assembly of one or more accessories such as ladders etc.

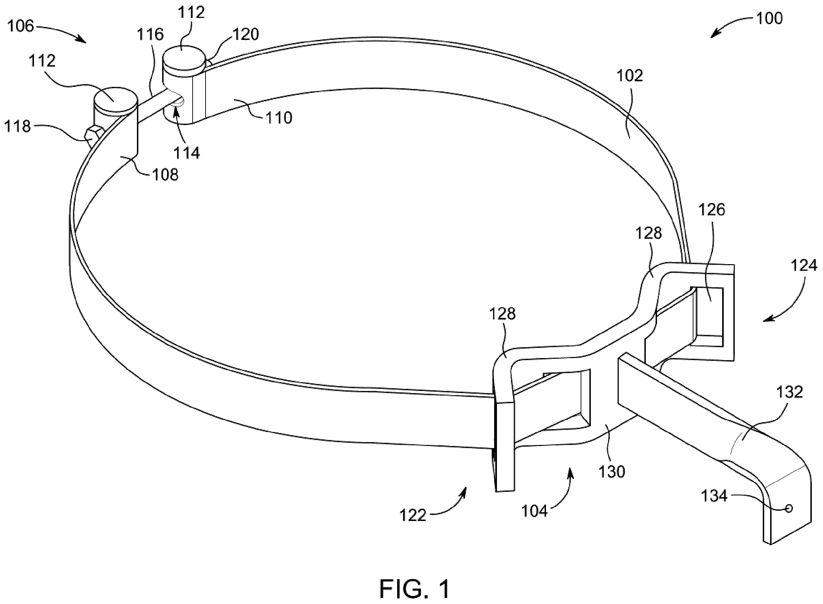

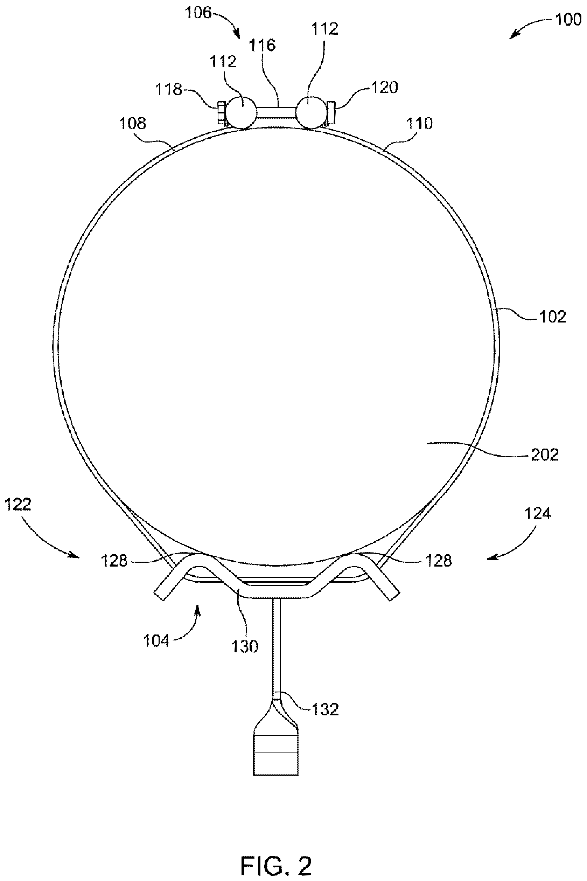

FIG. 1 is an isometric view of a clamping device 100, in accordance with an example embodiment of the present disclosure. FIG. 2 is a top view of the clamping device, in accordance with an example embodiment of the present disclosure. FIG. 1 is described in conjunction with FIG. 2.

The clamping device 100 may comprise a belt 102, a base plate 104, and a fastening unit 106. In some embodiments, the belt 102 may be wrapped around a circumference of a pole 202, as shown in FIG. 2. The belt 102 may serve as a clamping ring to hold the clamping device 100 onto the pole 202. Further, the belt 102 may comprise a first end 108 and a second end 110. The first end 108 and the second end 110 may correspond to free ends of the belt 102.

In some embodiments, the belt 102 may be bent to position the first end 108 and the second end 110 in proximity to each other to form a circular structure. Further, the first end 108 and the second end 110 of the belt 102 may be coupled together using the fastening unit 106. Further, each of the first end 108 and the second end 110 may be coupled to at least one shaft 112. In some embodiments, each of the first end 108 and the second end 110 of the belt 102 may be welded to the at least one shaft 112. Further, the at least one shaft 112 may have at least one hole 114 to allow the engagement of the fastening unit 106 with the belt 102. In some embodiments, the fastening unit 106 may include at least one bolt 116 and at least one nut 118.

In some embodiments, the at least one hole 114 may be configured to receive the at least one bolt 116. Further, the at least one bolt 116 may have a cap 120 integrated at one end and a threaded portion (not shown) integrated at the other end. The other end, i.e., the threaded portion of the bolt 116 may be fastened with at least one nut 118. In some embodiments, the at least one hole 114 may be a through hole integrated transversely to the at least one shaft 112. In some embodiments, the at least one nut 118 may be a threaded nut that may be rotated over the threaded portion to adjust diameter of the belt 102. In some example embodiments, the diameter of the belt 102 may be adjusted according to diameter of the pole 202.

Further, the belt 102 may be coupled to the base plate 104. In some embodiments, the base plate 104 may have a first end 122 and a second end 124. Each of the first end 122 and the second end 124 may be fabricated with at least two slots 126 to receive the belt 102. In some embodiments, the at least two slots 126 may have, but not limited to, a rectangular, square, or circular shape. The base plate 104 may be coupled to the belt 102 such that, the first end 108 may be inserted from the at least two slots 126 of the first end 122 and taken out from the at least two slots 126 of the second end 124.

Further, the base plate 104 may comprise at least two peaks 128 and at least one elongated portion 130. In some embodiments, the at least one elongated portion 130 may be a flat portion of the base plate 104 and the at least two peaks 128 may correspond to curved portions of the base plate 104 positioned on either side of the at least one elongated portion 130. It may be noted that the at least two slots 126 on the first end 122 and the second end 124 of the base plate 104 may be fabricated beneath the at least two peaks 128, in some examples. The at least two peaks 128 may define contact points (e.g., at least two contact points) with the pole 202 to provide or otherwise enable a uniform distribution of force. In some embodiments, the at least one elongated portion 130 may be configured to bear stress applied over the at least two peaks 128. In some embodiments, the at least one elongated portion 130 may be configured to attach one or more accessories, such as, a clamping ladder (not shown).

Further, a holder 132 may be coupled on an outer side of the at least one elongated portion 130. In some embodiments, the clamping ladder may be coupled to the holder 132. Referring to FIG. 1, the holder 132 may be an L-shaped plate with one end attached to the outer side of the at least one elongated portion 130 and other end to be coupled to an accessory, such as the clamping ladder. Further, the holder 132 may have at least one through hole 134 fabricated towards one end of the holder 132. In some embodiments, the at least one through hole 134 may be configured to attach the clamping ladder. It will be apparent to one skilled in the art that the shape of the holder 132 and its coupling with the clamping ladder is provided for illustrations purposes only and, in some examples, may be shaped to otherwise accept or otherwise engage an accessory. Any modification to the design of the holder 132 to attach multiple accessories may be applicable to accommodate the multiple accessories, without departing from the scope of the disclosure.

In some embodiments, the belt 102 and the base plate 104 are made of at least one of steel, aluminum alloys, or iron. In some embodiments, the belt 102 and the base plate 104 may be made up of some other material as well, without departing from the scope of the disclosure.

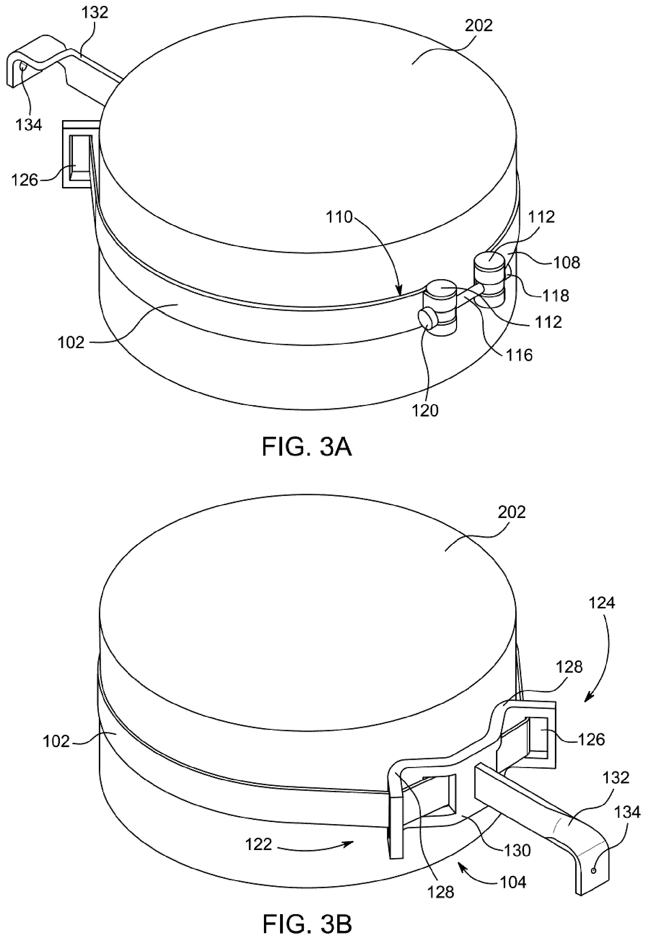

FIGS. 3A-3B illustrate the clamping device 100 braced around the pole 202, in accordance with an example embodiment of the present disclosure. FIGS. 3A-3B are described in conjunction with FIGS. 1 & 2.

As discussed above, the at least two peaks 128 of the base plate 104 may define the at least two contact points with the pole 202 to provide the uniform distribution of force. In some example embodiments, the clamping device 100 may be braced around the pole 202 and the base plate 104 may be adjusted such the at least two peaks 128 may touch the pole 202. Further, the fastening unit 106 may be adjusted to tighten the clamping device 100 around the pole 202 such that the at least two peaks 128 are pressed and/or otherwise urged against the pole 202. Such pressing of the at least two peaks 128 against the pole 202 enables a uniform distribution of the force, in some examples. In some embodiments, the at least one nut 118 may be rotated over the threaded portion of the bolt 116 to adjust diameter of the belt 102, as discussed above. The at least one nut 118 may be rotated clockwise or counterclockwise to decrease or increase the diameter of the belt 102, and thus ensure proper adjustment of the belt 102 with the pole 202.

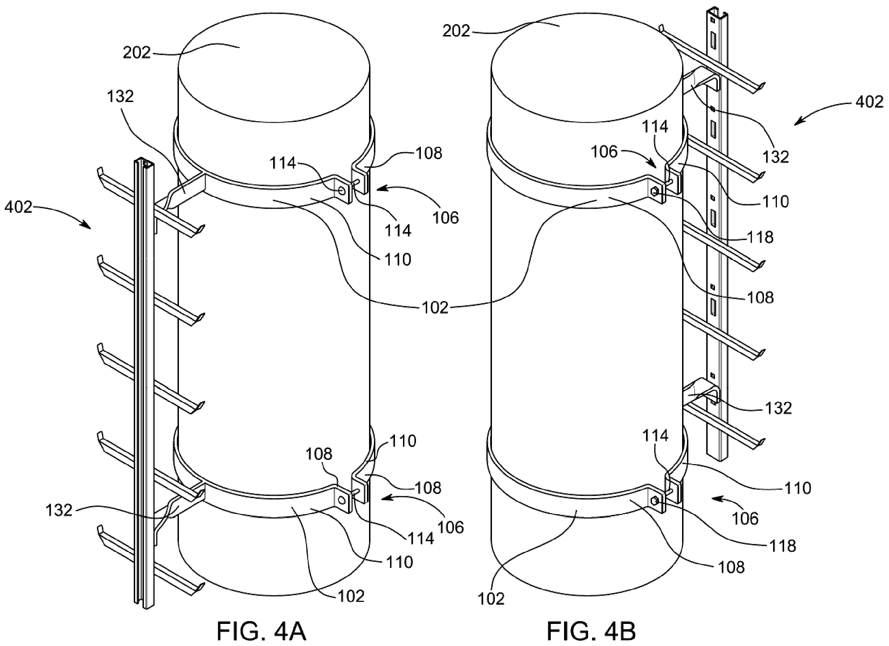

FIGS. 4A-4B illustrate one or more clamping devices 100 coupled to a ladder 402 and braced around the pole 202, in accordance with another example embodiment of the present disclosure. FIGS. 4A-4B are described in conjunction with FIGS. 1, 2, 3A, & 3B.

In some embodiments, the one or more clamping devices 100 may be braced around the length of the pole 202. Each of the one or more clamping devices 100 may have the holder 132, as discussed above. Further, the ladder 402 may be coupled to the holder 132 of each of the one or more clamping devices 100 along the length of the pole 202. In some embodiments, the at least one elongated portion 130 of the base plate 104 to which the holder 132 is attached, may bear the stress induced by the ladder 402. The force exerted over the at least one elongated portion 130 may be transferred to the pole 202 with the help of the contact points established by the at least two peaks 128 with the pole 202. Thereby, the contact points of the at least two peaks 128 may allow to distribute the force uniformly along the belt 102. In some embodiments, the one or more clamping devices 100 braced along the pole 202, may be adjusted at multiple diameters depending upon variation of diameter of the pole 202.

In some embodiments, the at least one elongated portion 130 may be configured to bear the stress applied by the weight of the ladder 402 and a user (not shown) over the ladder 402. Further, the stress of the user and the ladder 402 may be uniformly distributed along the belt 102. In some example embodiments, the at least two peaks 128 may be forced to push the pole 202 when the user starts climbing over the ladder 402. Such effect of weight of the user and the ladder 402 may tend to force the clamping device 100 downwards and the at least two peaks 128 may hold the clamping device 100 intact by pushing towards the pole 202.

In some example embodiments, the holder 132 may be coupled to the ladder 402 using one or more screws (not shown). In some embodiments, the ladder 402 may be welded over the holder 132 to increase the strength and weight carrying capacity of the ladder 402. In some embodiments, the holder 132 may be an L-shaped plate, a double plate or a U-section configuration. It will be apparent to one skilled in the art that the ladder 402 has been provided only for illustration purposes. In some embodiments, other accessories may also be installed over the clamping device 100, without departing from the scope of the disclosure.

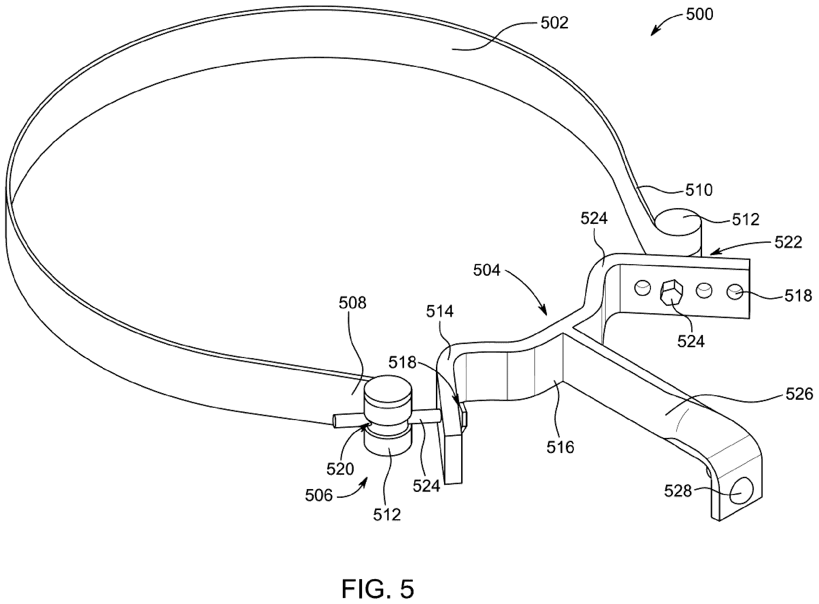

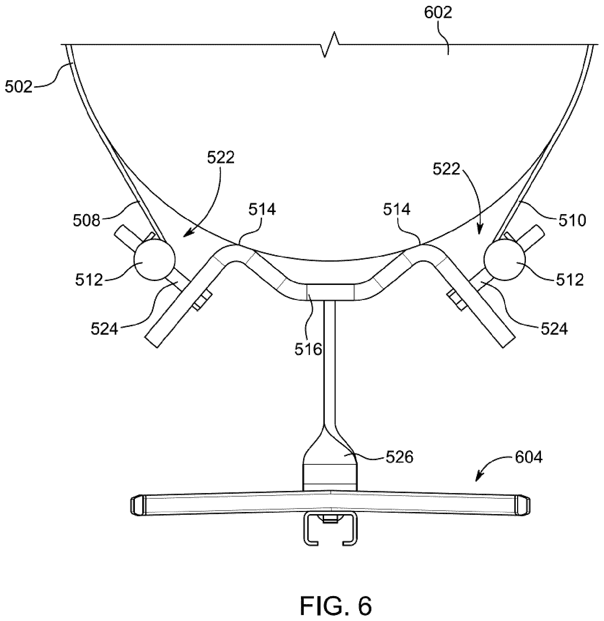

FIG. 5 illustrates an isometric view of a clamping device 500, in accordance with another embodiment of the present disclosure. FIG. 6 illustrates a top section view of the clamping device 500, in accordance with another embodiment of the present disclosure. FIG. 5 is described in conjunction with FIG. 6.

The clamping device 500 may comprise a belt 502, a base plate 504, and a clamping mechanism 506. In some embodiments, the belt 502 may be wrapped around circumference of a pole 602, as shown in FIG. 6. The belt 502 may serve as a clamping ring to hold the clamping device 500 onto the pole 602. Further, the belt 502 may comprise a first end 508 and a second end 510. The first end 508 and the second end 510 may, in some examples, correspond to free ends.

Further, the base plate 504 may be coupled to the belt 502. The base plate 504 may be positioned between the first end 508 and the second end 510 of the belt 502. Further, each of the first end 508 and the second end 510 may be coupled to at least one shaft 512. In some embodiments, the first end 508 and the second end 510 may be coupled to the at least one shaft 512 in a similar manner as described in FIG. 1.

The base plate 504 may comprise at least two peaks 514 and at least one elongated portion 516. The at least two peaks 514 may define at least two contact points with the pole 602 to provide the uniform distribution of force, as discussed above. Further, one or more slots 518 may be fabricated at both ends of the base plate 504. It may be noted that either ends of the base plate 504 may be elongated flanges with the one or more slots 518 on the one end and the one or more slots 518 on the other end. Further, the one end of base plate 504 may be coupled to the first end 508 of the belt 502 and the other end of the base plate 504 may be coupled to the second end 510 of the belt 502.

Further, the at least one shaft 512 coupled to the first end 508 and the second end 510 of the belt 502, may have at least one hole 520 configured to receive one or more fasteners 522. In some embodiments, the one or more fasteners 522 may be at least one bolt 524. Is some embodiments, the at least one slot 518 and the at least one hole 520 may receive the at least one bolt 524. The at least one bolt 524 may be configured to attach each ends of the base plate 504 with the first end 508 and the second end 510 of the belt 502.

Further, the other end of the base plate 504 having the one or more slots 518 may be removably coupled to the at least one shaft 512 coupled to the second end 510 of the belt 502 using the at least one bolt 524. In some embodiments, one slot of the one or more slots 518 on the other end of the base plate 504 may receive one end of the at least one bolt 524 and the at least one hole 520 of the at least one shaft 512 coupled to the second end 510 of the belt 502 may receive the one end of the at least one bolt 524. In some embodiments, the at least one bolt 524 is coupled between the other end of the base plate 504 and the second end 510 of the belt 502 may be a threaded screw with a threaded nut coupled towards the second end 510 of the belt 502.

In some embodiments, the one or more slots 518 on the other end of the base plate 504 may be provided to adjust the diameter of the belt 502. In some embodiments, the diameter of the belt 502 may be increased by coupling the at least one bolt 524 to a slot of the one or more slots 518 farther from the at least two peaks 514. Similarly, the diameter of the belt 502 may be decreased by coupling the at least one bolt 524 to a slot of the one or more slots 518 closer to the at least two peaks 514. In some embodiments, the at least one shaft 512 coupled to each of the first end 508 and the second end 510 of the belt 502, the at least one hole 520, the one or more slots 518, and the at least one bolt 524 coupled in a manner as described above, may be referred as the clamping mechanism 506.

Referring to FIG. 5, the at least one elongated portion 516 of the base plate 504 may be coupled to a holder 526. In some embodiments, the holder 526 may be welded to the at least one elongated portion 516 of the base plate 504. Further, the at least one elongated portion 516 may be configured to bear stress generated on the at least two peaks 514 of the base plate 504 when in contact with the pole 602. Further, the holder 526 may be fabricated with a through hole 528 that may be configured to couple with the multiple accessories, such as the clamping ladder. It may be noted that the shape of the holder 526 may be similar to the holder 132 as mentioned in the earlier part of the detailed description.

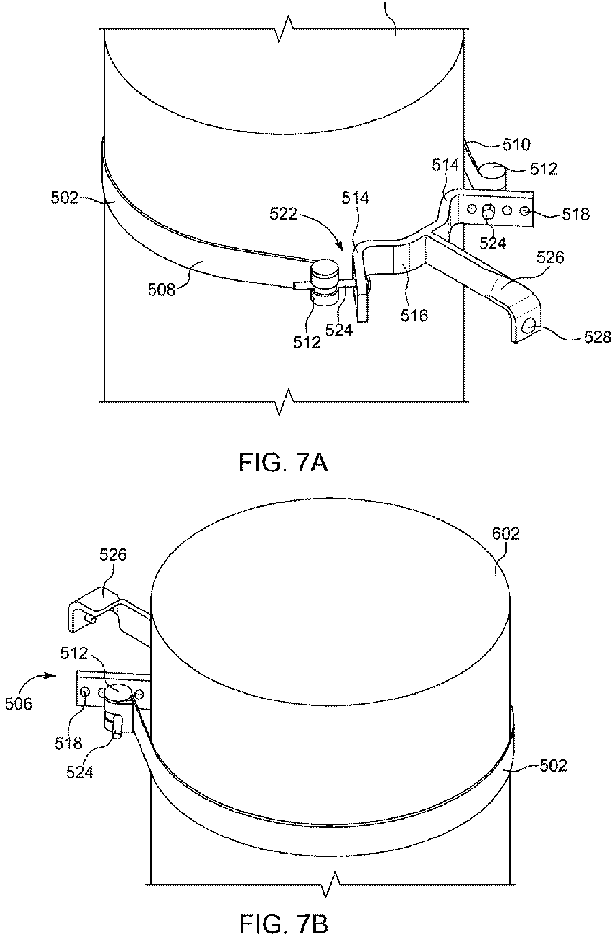

Referring to FIGS. 6-7B, the clamping device 500 may be configured to hold a ladder 604 via the holder 526 along the length of the pole 602. In some embodiments, the at least elongated portion 516 may be configured to bear stress applied by the weight of the ladder 604 and a user (not shown) over the ladder 604. Further, the stress of the user and the ladder 604 may be uniformly distributed along the belt 502. In some example embodiments, the at least two peaks 514 may be forced to push the pole 602 when the user starts climbing over the ladder 604. Such effect of weight of the user and the ladder 604 may tend to force the clamping device 500 downwards and the at least peaks 514 may hold the clamping device 500 intact by pushing towards the pole 602.

In some embodiments, the clamping device 500 may be configured to hold the pole 602 to provide support for an assembly of one or more accessories such as ladders. The clamping device 500 may serve a similar purpose as described in conjunction with FIGS. 1-4.

In some embodiments, the clamping device 500 may have more variation of diameter adjustments compared to the clamping device 100. The clamping device 500 may be applicable to poles having more variation in diameter along the length compared to the clamping device 100. In some embodiments, the belts 102, 502 may be a flexible strap or sheet or a bracelet that may be wrapped around the pole. In some example embodiments, the belts 102, 502 may be made from a material selected from a group of materials of stainless steel, alloy steel, and a composite plastic strap.

Such clamping devices 100, 500 may be clamped around the pole such as high-tension wire poles, light poles, fluid transmission poles etc. The clamping devices 100, 500 may be installed with the ladders as discussed above to allow the user to climb over the high-tension wire poles, light poles, fluid transmission poles etc. for various maintenance purposes. Such clamping devices 100, 500 may distribute the weight of the user climbing over the pole to avoid fracture of the pole, a ladder, and/or one or more additional accessories.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A clamping device comprising:
a belt having free ends;
a unit coupled to the free ends, wherein the unit is configured to adjust a diameter of the belt; and
a base plate having at least two slots to receive the belt, wherein the base plate defines contact points with a pole so as to provide a uniform distribution of force in an instance in which the base plate is in contact with the pole.

2. The clamping device of claim 1, wherein the unit is a fastening unit.

3. The clamping device of claim 2, wherein each of the free ends of the belt is coupled to at least one shaft having at least one hole to enable the engagement of the fastening unit with the belt.

4. The clamping device of claim 3, wherein the fastening unit includes at least one bolt and at least one nut for adjusting the diameter of the belt according to diameter of the pole.

5. The clamping device of claim 2, wherein the base plate further comprises at least two peaks and at least one elongated portion.

6. The clamping device of claim 5, wherein the at least one elongated portion is configured to attach one or more accessories with the clamping device.

7. The clamping device of claim 5, wherein the at least two peaks define the contact points of the base plate with the pole.

8. The clamping device of claim 5, wherein the belt and the base plate are made of at least one of steel, aluminum alloys, and iron.

9. The clamping device of claim 1, wherein the unit is a clamping mechanism.

10. The clamping device of claim 9, wherein the clamping mechanism includes at least one bolt and at least one nut for adjusting the diameter of the belt according to diameter of the pole.

11. The clamping device of claim 9, wherein the clamping mechanism is configured to couple the belt with the base plate via one or more slots fabricated over the base plate.

12. The clamping device of claim 9, wherein each of the free ends of the belt is coupled to at least one shaft having at least one hole to allow the engagement of the clamping mechanism with the base plate.

13. The clamping device of claim 9, wherein the base plate further comprises at least two peaks and at least one elongated portion, wherein the at least one elongated portion is configured to attach one or more accessories with the clamping device.

14. The clamping device of claim 13, wherein the at least two peaks define the at least two contact points of the base plate with the pole.

15. The clamping device of claim 9 wherein the belt and the base plate are made of at least one of steel, aluminum alloys, and iron.
